# EUROPEAN PATENT APPLICATION

(11) **EP 4 531 461 A1**
(43) Date of publication of application: **02.04.2025**
(21) Application number: 22943036.8
(22) Date of filing: 23.05.2022
(51) Int. Cl.: H04W 40/22

(54) **RELAY CONNECTION METHOD AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/094574
(87) International publication number: WO 2023/225830

(57) **Abstract**

Embodiments of the present application provides a relay connection method and an apparatus. The method comprises: sending first indication information to a second terminal device, wherein the first indication information comprises a candidate relay list, the candidate relay list comprises the identifier of at least one candidate relay terminal device, and the at least one candidate relay terminal device is used for establishing a relay connection between the first terminal device and the second terminal device. Thus, the first terminal device can implement a relay connection to the second terminal device, the link capacity of direct communication links between terminal devices is effectively improved, the communication quality is improved, the system communication efficiency is improved, normal operation of communication services between terminal devices is ensured, and interruption of communication is effectively avoided.

## Description

### TECHNICAL FIELD

The present disclosure relates to the field of communication technology, in particular to a relay connection method and a relay connection apparatus.

### BACKGROUND

In a communication system, in order to support direct communication between terminal devices, a sidelink communication mode is introduced, and a communication interface between the terminal devices is PC-5.

In the related art, in a case that a terminal device communicates with a network device, a communication connection is established between the terminal device and the network device via another terminal device as a relay. Through a relay connection, it is able to expand a coverage of a wireless network, eliminate or reduce a communication blind point, and obtain a higher link capacity. Based on this, in a case that a quality of a wireless channel between two terminal devices is deteriorated, the communication between the two terminal devices is considered to be maintained via a relay terminal device.

### SUMMARY

In a first aspect, the present disclosure provides in some embodiments a relay connection method, executed by a first terminal device, including: sending first indication information to a second terminal device. The first indication information includes a candidate relay list, the candidate relay list includes an identifier of at least one candidate relay terminal device, and the at least one candidate relay terminal device is used to establish a relay connection between the first terminal device and the second terminal device.

Optionally, the at least one candidate relay terminal device meets at least one of following conditions: that the at least one candidate relay terminal device belongs to at least one relay terminal device discovered by the first terminal device; that the at least one candidate relay terminal device does not belong to a serving relay terminal device; that a measurement result of a channel between the at least one candidate relay terminal device and the first terminal device is greater than a first threshold; that the at least one candidate relay terminal device has a capability of establishing a connection with the second terminal device; that the measurement result of the channel between the at least one candidate relay terminal device and the first terminal device is greater than a sum of a measurement result of a channel between the first terminal device and the second terminal device and a first offset; or that the measurement result of the channel between the at least one candidate relay terminal device and the first terminal device is greater than a sum of a measurement result of a channel between the first terminal device and the serving relay terminal device and a second offset.

Optionally, the first indication information includes a measurement result of a channel between the first terminal device and the at least one candidate relay terminal device.

Optionally, the first indication information includes a measurement result of a channel between the first terminal device and the second terminal device or between the first terminal device and a serving relay terminal device.

Optionally, the sending the first indication information to the second terminal device includes: in response to a first condition being met, sending the first indication information to the second terminal device. The first condition includes at least one of: that a measurement result of a channel between the first terminal device and the second terminal device is smaller than a second threshold; that a measurement result of a channel between the first terminal device and a serving relay terminal device is smaller than a third threshold; that a measurement result of a channel between the first terminal device and the at least one candidate relay terminal device is greater than a first threshold; that the measurement result of the channel between the first terminal device and the at least one candidate relay terminal device is greater than a sum of the measurement result of the channel between the first terminal device and the second terminal device and a first offset; or that the measurement result of the channel between the first terminal device and the at least one candidate relay terminal device is greater than a sum of the measurement result of the channel between the first terminal device and the serving relay terminal device and a second offset.

Optionally, the sending the first indication information to the second terminal device includes: in response to receiving second indication information sent by the second terminal device, sending the first indication information to the second terminal device, and the second indication information is used to indicate the first terminal device to send the candidate relay list.

Optionally, the sending the first indication information to the second terminal device includes: in response to receiving third indication information sent by a serving relay terminal device, sending the first indication information to the second terminal device, and the third indication information is used to indicate the first terminal device to send the candidate relay list.

Optionally, the relay connection method further includes: receiving at least one of the first offset, the second offset, the first threshold, the second threshold or the third threshold sent by the second terminal device.

Optionally, the relay connection method further includes: receiving at least one of the first offset, the second offset, the first threshold, the second threshold or the third threshold sent by the serving relay terminal device.

Optionally, the relay connection method further includes: determining at least one of the first offset, the second offset, the first threshold, the second threshold or the third threshold based on resource pool configuration information, and the resource pool configuration information is determined based on a broadcast message sent by a network device or configuration information sent by the network device.

Optionally, the relay connection method further includes: receiving at least one of the first offset, the second offset, the first threshold, the second threshold or the third threshold sent by a network device.

Optionally, the relay connection method further includes: determining at least one of the first offset, the second offset, the first threshold, the second threshold or the third threshold.

Optionally, the measurement result of the channel is a Sidelink Discovery signal-Reference Signal Receiving Power (SD-RSRP) or a Sidelink-Reference Signal Receiving Power (SL-RSRP).

Optionally, the relay connection method further includes: receiving fourth indication information sent by the second terminal device, and the fourth indication information carries an identifier of a target relay terminal device determined by the second terminal device.

Optionally, the relay connection method further includes: sending acknowledgement indication information to the second terminal device.

Optionally, the relay connection method further includes: establishing a connection with the target relay terminal device.

Optionally, the relay connection method further includes: establishing a connection with the second terminal device via the target relay terminal device.

Optionally, the relay connection method further includes: in response to a connection establishment failure between the first terminal device and the target relay terminal device, sending rejection indication information to the second terminal device.

In a second aspect, the present disclosure provides in some embodiments a relay connection method, executed by a second terminal device, including: receiving first indication information sent by a first terminal device. The first indication information includes a candidate relay list, the candidate relay list includes an identifier of at least one candidate relay terminal device, and the at least one candidate relay terminal device is used to establish a relay connection between the first terminal device and the second terminal device.

Optionally, the at least one candidate relay terminal device meets at least one of following conditions: that the at least one candidate relay terminal device belongs to at least one relay terminal device discovered by the first terminal device; that the at least one candidate relay terminal device does not belong to a serving relay terminal device; that a measurement result of a channel between the at least one candidate relay terminal device and the first terminal device is greater than a first threshold; that the at least one candidate relay terminal device has a capability of establishing a connection with the second terminal device; that the measurement result of the channel between the at least one candidate relay terminal device and the first terminal device is greater than a sum of a measurement result of a channel between the first terminal device and the second terminal device and a first offset; or that the measurement result of the channel between the at least one candidate relay terminal device and the first terminal device is greater than a sum of a measurement result of a channel between the first terminal device and the serving relay terminal device and a second offset.

Optionally, the first indication information includes a measurement result of a channel between the first terminal device and the at least one candidate relay terminal device.

Optionally, the first indication information includes a measurement result of a channel between the first terminal device and the second terminal device or between the first terminal device and a serving relay terminal device.

Optionally, the relay connection method further includes: sending at least one of the first offset, the second offset, the first threshold, a second threshold or a third threshold to the first terminal device, and the second threshold and the third threshold are used to trigger the first terminal device to send the first indication information.

Optionally, the measurement result of the channel is a SD-RSRP or a SL-RSRP.

Optionally, the relay connection method further includes: sending fourth indication information to the first terminal device, and the fourth indication information carries an identifier of a target relay terminal device determined by the second terminal device.

Optionally, the relay connection method further includes: receiving acknowledgement indication information sent by the first terminal device; and establishing a connection with the first terminal device via the target relay terminal device.

Optionally, the relay connection method further includes: in response to a connection establishment failure between the first terminal device and the target relay terminal device, receiving rejection indication information sent by the first terminal device.

Optionally, the relay connection method further includes: in response to not receiving the first indication information sent by the first terminal device, sending second indication information to the first terminal device, and the second indication information is used to indicate the first terminal device to send the candidate relay list.

In a third aspect, the present disclosure provides in some embodiments a relay connection method, executed by a network device, including: sending at least one of a first offset, a second offset, a first threshold, a second threshold or a third threshold to a first terminal device. The first offset, the second offset and the first threshold are used to determine at least one candidate relay terminal device, the second threshold and the third threshold are used to trigger the first terminal device to send first indication information, the first indication information includes a candidate relay list, the candidate relay list includes an identifier of the at least one candidate relay terminal device, and the at least one candidate relay terminal device is used to establish a relay connection between the first terminal device and a second terminal device.

Optionally, the sending the at least one of the first offset, the second offset, the first threshold, the second threshold or the third threshold to the first terminal device includes: sending a broadcast message to the first terminal device, and the broadcast message carries the at least one of the first offset, the second offset, the first threshold, the second threshold or the third threshold.

Optionally, the sending the at least one of the first offset, the second offset, the first threshold, the second threshold or the third threshold to the first terminal device includes: sending a first signaling corresponding to the first terminal device to the first terminal device, and the first signaling carries the at least one of the first offset, the second offset, the first threshold, the second threshold or the third threshold.

In a fourth aspect, the present disclosure provides in some embodiments a relay connection apparatus, applied to a first terminal device, including: a transceiver unit configured to send first indication information to a second terminal device. The first indication information includes a candidate relay list, the candidate relay list includes an identifier of at least one candidate relay terminal device, and the at least one candidate relay terminal device is used to establish a relay connection between the first terminal device and the second terminal device.

Optionally, the at least one candidate relay terminal device meets at least one of following conditions: that the at least one candidate relay terminal device belongs to at least one relay terminal device discovered by the first terminal device; that the at least one candidate relay terminal device does not belong to a serving relay terminal device; that a measurement result of a channel between the at least one candidate relay terminal device and the first terminal device is greater than a first threshold; that the at least one candidate relay terminal device has a capability of establishing a connection with the second terminal device; that the measurement result of the channel between the at least one candidate relay terminal device and the first terminal device is greater than a sum of a measurement result of a channel between the first terminal device and the second terminal device and a first offset; or that the measurement result of the channel between the at least one candidate relay terminal device and the first terminal device is greater than a sum of a measurement result of a channel between the first terminal device and the serving relay terminal device and a second offset.

Optionally, the first indication information includes a measurement result of a channel between the first terminal device and the at least one candidate relay terminal device.

Optionally, the first indication information includes a measurement result of a channel between the first terminal device and the second terminal device or between the first terminal device and a serving relay terminal device.

Optionally, the transceiver unit is specifically configured to: in response to a first condition being met, send the first indication information to the second terminal device. The first condition includes at least one of: that a measurement result of a channel between the first terminal device and the second terminal device is smaller than a second threshold; that a measurement result of a channel between the first terminal device and a serving relay terminal device is smaller than a third threshold; that a measurement result of a channel between the first terminal device and the at least one candidate relay terminal device is greater than a first threshold; that the measurement result of the channel between the first terminal device and the at least one candidate relay terminal device is greater than a sum of the measurement result of the channel between the first terminal device and the second terminal device and a first offset; or that the measurement result of the channel between the first terminal device and the at least one candidate relay terminal device is greater than a sum of the measurement result of the channel between the first terminal device and the serving relay terminal device and a second offset.

Optionally, the transceiver unit is specifically configured to: in response to receiving second indication information sent by the second terminal device, send the first indication information to the second terminal device, and the second indication information is used to indicate the first terminal device to send the candidate relay list.

Optionally, the transceiver unit is specifically configured to: in response to receiving third indication information sent by a serving relay terminal device, send the first indication information to the second terminal device, and the third indication information is used to indicate the first terminal device to send the candidate relay list.

Optionally, the transceiver unit is further configured to: receive at least one of the first offset, the second offset, the first threshold, the second threshold or the third threshold sent by the second terminal device.

Optionally, the transceiver unit is further configured to: receive at least one of the first offset, the second offset, the first threshold, the second threshold or the third threshold sent by the serving relay terminal device.

Optionally, the transceiver unit is further configured to: determine at least one of the first offset, the second offset, the first threshold, the second threshold or the third threshold based on resource pool configuration information, and the resource pool configuration information is determined based on a broadcast message sent by a network device or configuration information sent by the network device.

Optionally, the transceiver unit is further configured to: receive at least one of the first offset, the second offset, the first threshold, the second threshold or the third threshold sent by a network device.

Optionally, the transceiver unit is further configured to: determine at least one of the first offset, the second offset, the first threshold, the second threshold or the third threshold.

Optionally, the measurement result of the channel is a SD-RSRP or a SL-RSRP.

Optionally, the transceiver unit is further configured to: receive fourth indication information sent by the second terminal device, and the fourth indication information carries an identifier of a target relay terminal device determined by the second terminal device.

Optionally, the transceiver unit is further configured to: send acknowledgement indication information to the second terminal device.

Optionally, the transceiver unit is further configured to: establish a connection with the target relay terminal device.

Optionally, the transceiver unit is further configured to: establish a connection with the second terminal device via the target relay terminal device.

Optionally, the transceiver unit is further configured to: in response to a connection establishment failure between the first terminal device and the target relay terminal device, send rejection indication information to the second terminal device.

In a fifth aspect, the present disclosure provides in some embodiments a relay connection apparatus, applied to a second terminal device, including: a transceiver unit configured to receive first indication information sent by a first terminal device. The first indication information includes a candidate relay list, the candidate relay list includes an identifier of at least one candidate relay terminal device, and the at least one candidate relay terminal device is used to establish a relay connection between the first terminal device and the second terminal device.

Optionally, the at least one candidate relay terminal device meets at least one of following conditions: that the at least one candidate relay terminal device belongs to at least one relay terminal device discovered by the first terminal device; that the at least one candidate relay terminal device does not belong to a serving relay terminal device; that a measurement result of a channel between the at least one candidate relay terminal device and the first terminal device is greater than a first threshold; that the at least one candidate relay terminal device has a capability of establishing a connection with the second terminal device; that the measurement result of the channel between the at least one candidate relay terminal device and the first terminal device is greater than a sum of a measurement result of a channel between the first terminal device and the second terminal device and a first offset; or that the measurement result of the channel between the at least one candidate relay terminal device and the first terminal device is greater than a sum of a measurement result of a channel between the first terminal device and the serving relay terminal device and a second offset.

Optionally, the first indication information includes a measurement result of a channel between the first terminal device and the at least one candidate relay terminal device.

Optionally, the first indication information includes a measurement result of a channel between the first terminal device and the second terminal device or between the first terminal device and a serving relay terminal device.

Optionally, the transceiver unit is further configured to: send at least one of the first offset, the second offset, the first threshold, a second threshold or a third threshold to the first terminal device, in which the second threshold and the third threshold are used to trigger the first terminal device to send the first indication information.

Optionally, the measurement result of the channel is a SD-RSRP or a SL-RSRP.

Optionally, the transceiver unit is further configured to: send fourth indication information to the first terminal device, and the fourth indication information carries an identifier of a target relay terminal device determined by the second terminal device from the at least one candidate relay terminal device.

Optionally, the transceiver unit is further configured to: receive acknowledgement indication information sent by the first terminal device; and establish a connection with the first terminal device via the target relay terminal device.

Optionally, the transceiver unit is further configured to: in response to a connection establishment failure between the first terminal device and the target relay terminal device, receive rejection indication information sent by the first terminal device.

Optionally, the transceiver unit is further configured to: in response to not receiving the first indication information sent by the first terminal device, send second indication information to the first terminal device, and the second indication information is used to indicate the first terminal device to send the candidate relay list.

In a sixth aspect, the present disclosure provides in some embodiments a relay connection apparatus, applied to a network device, including a transceiver unit configured to send at least one of a first offset, a second offset, a first threshold, a second threshold or a third threshold to a first terminal device. The first offset, the second offset and the first threshold are used to determine at least one candidate relay terminal device, the second threshold and the third threshold are used to trigger the first terminal device to send first indication information, the first indication information includes a candidate relay list, the candidate relay list includes an identifier of the at least one candidate relay terminal device, and the at least one candidate relay terminal device is used to establish a relay connection between the first terminal device and a second terminal device.

Optionally, the transceiver unit is further configured to: send a broadcast message to the first terminal device, and the broadcast message carries the at least one of the first offset, the second offset, the first threshold, the second threshold or the third threshold.

Optionally, the transceiver unit is further configured to: send a first signaling corresponding to the first terminal device to the first terminal device, and the first signaling carries the at least one of the first offset, the second offset, the first threshold, the second threshold or the third threshold.

In a seventh aspect, the present disclosure provides in some embodiments a communication apparatus, including a processor and a memory. The memory is configured to store therein a computer program, and the processor is configured to execute the computer program in the memory, so as to implement the relay connection method in the first aspect, or implement the relay connection method in the second aspect.

In an eighth aspect, the present disclosure provides in some embodiments a communication apparatus, including a processor and a memory. The memory is configured to store therein a computer program, and the processor is configured to execute the computer program in the memory, so as to implement the relay connection method in the third aspect.

In a ninth aspect, the present disclosure provides in some embodiments a processor and an interface circuit. The interface circuit is configured to receive code instructions and transmit the code instructions to the processor. The processor is configured to execute the code instructions, so as to implement the relay connection method in the first aspect, or implement the relay connection method in the second aspect.

In a tenth aspect, the present disclosure provides in some embodiments a processor and an interface circuit. The interface circuit is configured to receive code instructions and transmit the code instructions to the processor. The processor is configured to execute the code instructions, so as to implement the relay connection method in the third aspect.

In an eleventh aspect, the present disclosure provides in some embodiments a computer-readable storage medium storing therein instructions. The instructions, when executed, implement the relay connection method in the first aspect, or implement the relay connection method in the second aspect.

In a twelfth aspect, the present disclosure provides in some embodiments a computer-readable storage medium storing therein instructions. The instructions, when executed, implement the relay connection method in the third aspect.

In a thirteenth aspect, the present disclosure provides in some embodiments a computer program. The computer program is executed by a computer, so as implement the relay connection method in the first aspect, or implement the relay connection method in the second aspect.

In a fourteenth aspect, the present disclosure provides in some embodiments a computer program. The computer program is executed by a computer, so as implement the relay connection method in the third aspect.

According to the relay connection method and the apparatus in the embodiments of the present disclosure, the first indication information is sent to the second terminal device, the first indication information includes the candidate relay list, the candidate relay list includes the identifier of the at least one candidate relay terminal device, and the at least one candidate relay terminal device is used to establish the relay connection between the first terminal device and the second terminal device. As a result, it is able to achieve the relay connection between the first terminal device and the second terminal device, improve a link capacity of a direct communication link between the terminal devices, improve the communication quality and the system communication efficiency, ensure that a communication service between the terminal devices is performed normally, and effectively prevent the communication from being interrupted.

The additional aspects and advantages of the present disclosure will be partially given or become apparent in the following description, or may be understood through the implementation of the present disclosure.

### BRIEF DESCRIPTION OF THE DRAWINGS

In order to illustrate the technical solutions of the embodiments of the present disclosure or the background in a clearer manner, the drawings desired for the embodiments of the present disclosure or the background will be described hereinafter briefly.
FIG. 1 is a schematic view showing architecture of a communication system according to an embodiment of the present disclosure;
FIG. 2 is a flow chart of a relay connection method according to an embodiment of the present disclosure;
FIG. 3 is a flow chart of a relay connection method according to an embodiment of the present disclosure;
FIG. 4 is a flow chart of a relay connection method according to an embodiment of the present disclosure;
FIG. 5 is a flow chart of a relay connection method according to an embodiment of the present disclosure;
FIG. 6 is a flow chart of a relay connection method according to an embodiment of the present disclosure;
FIG. 7 is a schematic view showing a relay connection apparatus according to an embodiment of the present disclosure;
FIG. 8 is a schematic view showing a relay connection apparatus according to an embodiment of the present disclosure;
FIG. 9 is a schematic view showing a relay connection apparatus according to an embodiment of the present disclosure;
FIG. 10 is another schematic view showing the relay connection apparatus according to an embodiment of the present disclosure; and
FIG. 11 is a schematic view showing a chip according to an embodiment of the present disclosure.

### DETAILED DESCRIPTION

The present disclosure will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure.

The terms used in embodiments of the present disclosure are for illustrative purposes only, but do not intend to limit the present disclosure. Such a singular form as "one" or "the" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of the same type from each other. For example, without departing from the scope of the present disclosure, first information may also be called as second information, and similarly second information may also be called as first information. Depending on the context, such a word as "if" may be construed as "when ...", "in the case that ..." or "in response to determining that ...".

The embodiments of the present disclosure will be described hereinafter in details, and examples are shown in the drawings. Identical or similar reference numbers represent an identical or similar element. The following embodiments described with reference to the drawings are for illustrative purposes only, but shall not be used to limit the scope of the present disclosure.

In order to understand a relay connection method in the embodiments of the present disclosure in a better manner, an applicable communication system will be described hereinafter at first.

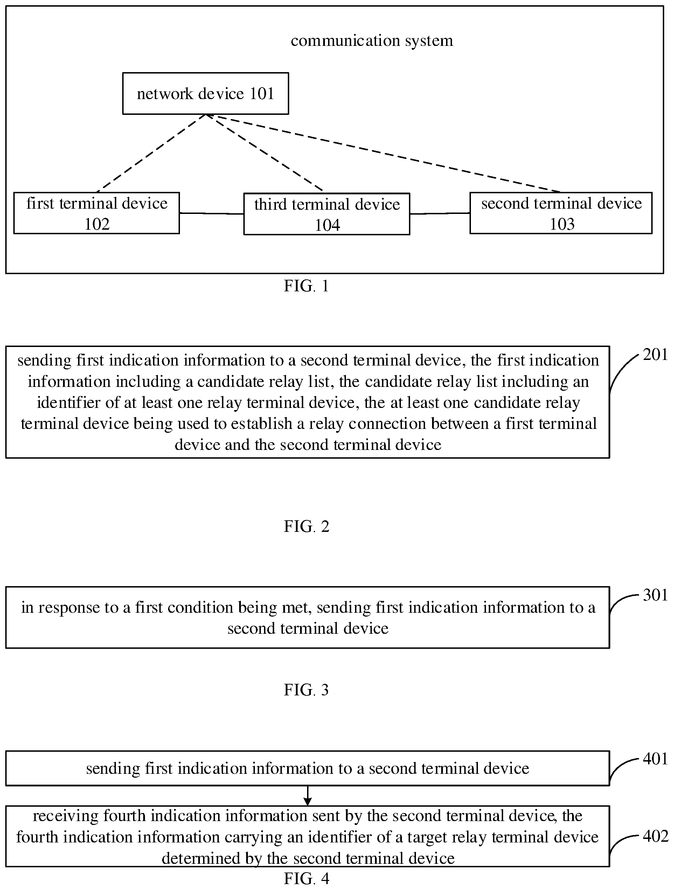

FIG. 1 is a schematic view showing architecture of a communication system according to an embodiment of the present disclosure. The communication system includes, but not limited to, one network device, one first terminal device one second terminal device and one third terminal device. Quantities and forms of the devices in FIG. 1 are for illustrative purposes only, but shall not be construed as limiting the embodiments of the present disclosure. In actual use, the communication system may include two or more network devices, two or more terminal devices, and two or more second terminal devices. For example, as shown in FIG. 1, the communication system includes one network device 101, one first terminal device 102, one second terminal device 103 and one third terminal device 104.

It should be appreciated that, the technical solutions in the embodiments of the present disclosure may be applied to various communication systems, e.g., a Long Term Evolution (LTE) system, a 5th-Generation (5G) mobile communication system, a 5G New Radio (NR) system, or any novel mobile communication system that may occur in the future.

In the embodiments of the present disclosure, the network device 101 is an entity at a network side for sending or receiving a signal. For example, the network device 101 is an evolved NodeB (eNB), a Transmission Reception Point (TRP), a next generation NodeB (gNB) in the NR system, a base station in the future mobile communication system, or an access point in a Wireless Fidelity (WiFi) system. A specific technology adopted by the network device and a specific device form thereof will not be particularly defined herein. The network device in the embodiments of the present disclosure may consist of a Central Unit (CU) and a Distributed Unit (DU), and the CU may also be called as control unit. Through the CU-DU structure, a protocol layer for the network device, e.g., a base station, is divided, i.e., a part of functions of the protocol layer are centrally controlled by the CU, a part of, or all of, the remaining functions of the protocol layer are distributed in the DU, and the DU is controlled by the CU.

In the embodiments of the present disclosure, the first terminal device 102, the second terminal device 103 and the relay terminal device 104 are each an entity at a user side for receiving or sending a signal, e.g., a mobile phone. The terminal device may also be called as terminal, User Equipment (UE), Mobile Station (MS), Mobile Terminal (MT), etc. The terminal device may be a vehicle having a communication function, a smart vehicle, a mobile phone, a wearable device, a pad, a computer having a wireless transceiver function, a Virtual Reality (VR) terminal, an Augmented Reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. In the embodiments of the present disclosure, a specific technology adopted by the terminal device and a specific device form thereof will not be particularly defined.

In the communication system, in order to support a direction communication between the terminal devices, a sidelink communication mode is introduced, and a communication interface between the terminal devices is PC-5. Depending on a correspondence between a terminal device for transmission and a terminal device for reception, three transmission modes are supported on sidelink, i.e., unicast, multicast and broadcast.

In the related art, in a case that the terminal device communicates with the network device, a communication connection is established between the terminal device and the network device via another relay terminal device. Through the relay connection, it is able to expand a coverage of a wireless network, eliminate or reduce communication blind points, and obtain a higher link capacity.

Based on the above, in a case that the quality of a wireless channel between two terminal devices is deteriorated, the communication between two terminal devices is considered to be maintained via one relay terminal device.

In other words, the first terminal device 102 is in direct communication with the second terminal device 103 via sidelink. In a case that the quality of the wireless channel between the first terminal device 102 and the second terminal device 103 is deteriorated, the first terminal device 102 is not in direct communication with the second terminal device 103, and instead, it is in communication with the second terminal device 103 via another terminal device, i.e., the third terminal device 104. The first terminal device 102 and the second terminal device 103 are called as remote terminal devices, and the third terminal device 104 for providing a relay function is called as relay terminal device. It should be appreciated that, the unicast communication is achieved between the above-mentioned terminal devices via sidelink.

It should be appreciated that, the communication system described herein is used to describe the technical solutions provided in the embodiments of the present disclosure in a clearer manner, but shall not be construed as limiting the technical solutions. It is obvious for a person skilled in the art that, along with the evolution of the system architecture as well as the emergence of new service scenarios, the technical solutions are also applicable to similar technical problems.

The relay connection method and the apparatus provided in the embodiments of the present disclosure will be described hereinafter in details in conjunction with the drawings.

FIG. 2 is a flow chart of a relay connection method according to an embodiment of the present disclosure. It should be appreciated that, the relay connection method in the embodiments of the present disclosure is executed by a first terminal device. This method is executed separately, or executed in combination with any one of the other embodiments of the present disclosure. As shown in FIG. 2, the relay connection method includes the following step.

Step 201: first indication information is sent to a second terminal device. The first indication information includes a candidate relay list, the candidate relay list includes an identifier of at least one candidate relay terminal device, and the at least one candidate relay terminal device is used to establish a relay connection between the first terminal device and the second terminal device.

In this embodiment of the present disclosure, a unicast connection has already been established between the first terminal device and the second terminal device. The first terminal device is in direct communication with the second terminal device, or in communication with the second terminal device via a serving relay terminal device.

In this embodiment of the present disclosure, the first terminal device sends the first indication information carrying the candidate relay list to the second terminal device, and the candidate relay list includes the identifier of the at least one candidate relay terminal device. Upon the receipt of the first indication information, the second terminal device determines the at least one candidate relay terminal device based on the first indication information.

The at least one candidate relay terminal device is used to establish the relay connection between the first terminal device and the second terminal device. In other words, the connection is achieved between the first terminal device and the second terminal device via the at least one candidate relay terminal device.

In some embodiments of the present disclosure, the at least one candidate relay terminal device meets at least one of following conditions, i.e., the at least one candidate relay terminal device is determined from the candidate relay list based on at least one of the following conditions: that the at least one candidate relay terminal device belongs to at least one relay terminal device discovered by the first terminal device; that the at least one candidate relay terminal device does not belong to a serving relay terminal device; that a measurement result of a channel between the at least one candidate relay terminal device and the first terminal device is greater than a first threshold; that the at least one candidate relay terminal device has a capability of establishing a connection with the second terminal device; that the measurement result of the channel between the at least one candidate relay terminal device and the first terminal device is greater than a sum of a measurement result of a channel between the first terminal device and the second terminal device and a first offset; or that the measurement result of the channel between the at least one candidate relay terminal device and the first terminal device is greater than a sum of a measurement result of a channel between the first terminal device and the serving relay terminal device and a second offset.

The serving relay terminal device refers to a terminal device which has already provided the relay function for the connection between the terminal devices.

In this embodiment of the present disclosure, whether or not the at least one candidate relay terminal device has the capability of establishing the connection with the second terminal device is determined based on whether or not a discovery signal for the candidate relay terminal device carries an identifier of the second terminal device. In other words, in a case that the discovery signal for one terminal device carries the identifier of the second terminal device, it may be determined that the terminal device has the capability of establishing the connection with the second terminal device.

In this embodiment of the present disclosure, the first terminal device discovers the at least one relay terminal device, e.g., the first terminal device discovers the at least one relay terminal device via a discovery signal.

In some embodiments of the present disclosure, the first indication information further includes the measurement result of the channel between the first terminal device and the at least one candidate relay terminal device.

In some embodiments of the present disclosure, the first indication information further includes the measurement result of the channel between the first terminal device and the second terminal device or between the first terminal device and a serving relay terminal device.

It should be appreciated that, in a case that the first terminal device is in direct communication with the second terminal device, the first indication information includes the measurement result of the channel between the first terminal device and the second terminal device. In a case that the first terminal device is in communication with the second terminal device via the serving relay terminal device, the first indication information includes the measurement result of the channel between the first terminal device and the serving relay terminal device.

In the embodiments of the present disclosure, optionally, the measurement result of the channel is a SD-RSRP or a SL-RSRP.

In some embodiments of the present disclosure, in response to a first condition being met, the first terminal device sends the first indication information to the second terminal device.

Optionally, the first condition includes at least one of: that a measurement result of a channel between the first terminal device and the second terminal device is smaller than a second threshold; that a measurement result of a channel between the first terminal device and a serving relay terminal device is smaller than a third threshold; that a measurement result of a channel between the first terminal device and the at least one candidate relay terminal device is greater than a first threshold; that the measurement result of the channel between the first terminal device and the at least one candidate relay terminal device is greater than a sum of the measurement result of the channel between the first terminal device and the second terminal device and a first offset; or that the measurement result of the channel between the first terminal device and the at least one candidate relay terminal device is greater than a sum of the measurement result of the channel between the first terminal device and the serving relay terminal device and a second offset.

In some embodiments of the present disclosure, in response to receiving second indication information sent by the second terminal device, the first terminal device sends the first indication information to the second terminal device. The second indication information is used to indicate the first terminal device to send the candidate relay list.

In some embodiments of the present disclosure, in response to receiving third indication information sent by the serving relay terminal device, the first terminal device sends the first indication information to the second terminal device. The third indication information is used to indicate the first terminal device to send the candidate relay list.

In some embodiments of the present disclosure, the first terminal device receives at least one of the first offset, the second offset, the first threshold, the second threshold or the third threshold sent by the second terminal device.

In some embodiments of the present disclosure, the first terminal device receives at least one of the first offset, the second offset, the first threshold, the second threshold or the third threshold sent by the serving relay terminal device.

In some embodiments of the present disclosure, the first terminal device determines at least one of the first offset, the second offset, the first threshold, the second threshold or the third threshold based on resource pool configuration information.

Optionally, the resource pool configuration information is determined based on a broadcast message sent by a network device or configuration information sent by the network device
In some embodiments of the present disclosure, the first terminal device receives at least one of the first offset, the second offset, the first threshold, the second threshold or the third threshold sent by the network device.

Optionally, the first terminal device receives the broadcast message sent by the network device, and the broadcast message carries at least one of the first offset, the second offset, the first threshold, the second threshold, or the third threshold.

The first terminal device also receives a first signaling corresponding to the first terminal device sent by the network device, and the first signaling carries at least one of the first offset, the second offset, the first threshold, the second threshold, or the third threshold.

Optionally, the first signaling includes a plurality of second thresholds, and different second terminal devices correspond to different second thresholds. Identically, the first signaling also includes a plurality of third thresholds, and different serving relay terminal devices correspond to different third thresholds. The first signaling further includes a plurality of a plurality of first offsets, and different second terminal devices correspond to different first offsets. The first signaling further includes a plurality of second offsets, and different serving relay terminal devices correspond to different second offsets.

It should be appreciated that, different first terminal devices correspond to different first signalings, and at least ones of the first offsets, the second offsets, the first thresholds, the second thresholds or the third thresholds are different. In other words, the network device configures different offsets and thresholds for different first terminal devices via the signaling dedicated for each first terminal device, and different first terminal devices correspond to different first thresholds or the like.

In some embodiments of the present disclosure, the first terminal device determines at least one of the first offset, the second offset, the first threshold, the second threshold or the third threshold on its own initiative.

In other words, each of the first offset, the second offset, the first threshold, the second threshold and the third offset is determined by any of the above-mentioned implementation modes.

In some embodiments of the present disclosure, the first terminal device further receives fourth indication information sent by the second terminal device, and the fourth indication information carries an identifier of a target relay terminal device determined by the second terminal device.

Optionally, the target relay terminal device is included in the at least one candidate relay terminal device. The target relay terminal device may also be determined by the second terminal device and not included in the at least one candidate relay terminal device.

In some embodiments of the present disclosure, upon the receipt of the fourth indication information sent by the second terminal device, the first terminal device sends acknowledgement indication information to the second terminal device.

In some embodiments of the present disclosure, upon the receipt of the fourth indication information sent by the second terminal device, the first terminal device establishes a connection with the target relay terminal device.

In some embodiments of the present disclosure, upon the receipt of the fourth indication information sent by the second terminal device, the first terminal device establishes a connection with the second terminal device via the target relay terminal device.

In some embodiments of the present disclosure, in response to a connection establishment failure between the first terminal device and the target relay terminal device, the first terminal device sends rejection indication information to the second terminal device.

In a word, the first indication information is sent to the second terminal device, the first indication information includes the candidate relay list, the candidate relay list includes the identifier of the at least one candidate relay terminal device, and the at least one candidate relay terminal device is used to establish the relay connection between the first terminal device and the second terminal device. As a result, it is able to achieve the relay connection between the first terminal device and the second terminal device, effectively improve the link capacity of the direct communication link between the terminal devices, improve the communication quality and the system communication efficiency, ensure that the communication service between the terminal devices is performed normally, and effectively prevent the communication from being interrupted.

FIG. 3 is a flow chart of a relay connection method according to an embodiment of the present disclosure. It should be appreciated that, the relay connection method in this embodiment of the present disclosure is executed by a first terminal device. This method may be executed separately, or in combination with any of the other embodiments of the present disclosure. As shown in FIG. 3, the relay connection method includes the following step.

Step 301: in response to a first condition being met, first indication information is sent to a second terminal device.

The first indication information includes a candidate relay list, the candidate relay list includes an identifier of at least one candidate relay terminal device, and the at least one candidate relay terminal device is used to establish a relay connection between the first terminal device and the second terminal device.

In this embodiment of the present disclosure, a unicast communication has already been established between the first terminal device and the second terminal device. The first terminal device is in direct communication with the second terminal device, or in communication with the second terminal device via a serving relay terminal device.

In some embodiments of the present disclosure, the first indication information further includes a measurement result of a channel between the first terminal device and the at least one candidate relay terminal device.

In some embodiments of the present disclosure, the first indication information includes a measurement result of a channel between the first terminal device and the second terminal device or between the first terminal device and a serving relay terminal device.

Optionally, the first condition includes at least one of: that a measurement result of a channel between the first terminal device and the second terminal device is smaller than a second threshold; that a measurement result of a channel between the first terminal device and a serving relay terminal device is smaller than a third threshold; that a measurement result of a channel between the first terminal device and the at least one candidate relay terminal device is greater than a first threshold; that the measurement result of the channel between the first terminal device and the at least one candidate relay terminal device is greater than a sum of the measurement result of the channel between the first terminal device and the second terminal device and a first offset; or that the measurement result of the channel between the first terminal device and the at least one candidate relay terminal device is greater than a sum of the measurement result of the channel between the first terminal device and the serving relay terminal device and a second offset.

In some embodiments of the present disclosure, the first condition may also include that second indication information sent by the second terminal device is received. The second indication information is used to indicate the first terminal device to send the candidate relay list. In other words, in response to receiving the second indication information sent by the second terminal device, the first terminal device sends the first indication information to the second terminal device.

In some embodiments of the present disclosure, the first condition may also include that third indication information sent by the serving relay terminal device is received. The third indication information is used to indicate the first terminal device to send the candidate relay list. In other words, in response to receiving the third indication information sent by the serving relay terminal device, the first terminal device sends the first indication information to the second terminal device.

In this embodiment of the present disclosure, in a case that the first condition is met, the first terminal device is triggered to send the first indication information, i.e., send the candidate relay list to the second terminal device. The candidate relay list includes the identifier of the at least one candidate relay terminal device.

It should be appreciated that, the first condition includes at least one of the above-mentioned conditions, i.e., the first terminal device is triggered to send the first indication information in a case that one of the conditions is met, or a plurality of conditions is met.

Optionally, the measurement result of the channel is a SD-RSRP or a SL-RSRP.

In some embodiments of the present disclosure, the first terminal device receives at least one of the first offset, the second offset, the first threshold, the second threshold or the third threshold sent by the second terminal device.

In some embodiments of the present disclosure, the first terminal device receives at least one of the first offset, the second offset, the first threshold, the second threshold or the third threshold sent by the serving relay terminal device.

In some embodiments of the present disclosure, the first terminal device determines at least one of the first offset, the second offset, the first threshold, the second threshold or the third threshold based on resource pool configuration information.

Optionally, the resource pool configuration information is determined based on a broadcast message sent by a network device, or configuration information sent by the network device.

In some embodiments of the present disclosure, the first terminal device receives at least one of the first offset, the second offset, the first threshold, the second threshold or the third threshold sent by the network device.

Optionally, the first terminal device receives the broadcast message sent by the network device, and the broadcast message carries at least one of the first offset, the second offset, the first threshold, the second threshold or the third threshold.

The first terminal device also receives a first signaling corresponding to the first terminal device sent by the network device, and the first signaling carries at least one of the first offset, the second offset, the first threshold, the second threshold or the third threshold.

Optionally, the first signaling includes a plurality of second thresholds, and different second terminal devices correspond to different second thresholds. Identically, the first signaling also includes a plurality of third thresholds, and different serving relay terminal devices correspond to different third thresholds. The first signaling further includes a plurality of a plurality of first offsets, and different second terminal devices correspond to different first offsets. The first signaling further includes a plurality of second offsets, and different serving relay terminal devices correspond to different second offsets.

It should be appreciated that, different first terminal devices correspond to different first signalings, and at least ones of the first offsets, the second offsets, the first thresholds, the second thresholds or the third thresholds are the same or different. In other words, the network device configures different offsets and thresholds for different first terminal devices via the signaling dedicated for each first terminal device, and different first terminal devices correspond to different first thresholds or the like.

In some embodiments of the present disclosure, the first terminal device determines at least one of the first offset, the second offset, the first threshold, the second threshold or the third threshold on its own initiative.

In other words, each of the first offset, the second offset, the first threshold, the second threshold and the third offset is determined by any of the above-mentioned implementation modes.

In a word, the first indication information is sent to the second terminal device in response to the first condition being met, the first indication information includes the candidate relay list, the candidate relay list includes the identifier of the at least one candidate relay terminal device, and the at least one candidate relay terminal device is used to establish the relay connection between the first terminal device and the second terminal device. As a result, it is able to achieve the relay connection between the first terminal device and the second terminal device, effectively improve the link capacity of the direct communication link between the terminal devices, improve the communication quality and the system communication efficiency, ensure that the communication service between the terminal devices is performed normally, and effectively prevent the communication from being interrupted.

FIG. 4 is a flow chart of a relay connection method according to an embodiment of the present disclosure. It should be appreciated that, the relay connection method in this embodiment of the present disclosure is executed by a first terminal device. This method may be executed separately, or in combination with any of the other embodiments of the present disclosure. As shown in FIG. 4, the relay connection method includes the following steps.

Step 401: first indication information is sent to a second terminal device.

The first indication information includes a candidate relay list, the candidate relay list includes an identifier of at least one candidate relay terminal device, and the at least one candidate relay terminal device is used to establish a relay connection between the first terminal device and the second terminal device.

In this embodiment of the present disclosure, Step 401 may be implemented in any mode in the embodiments of the present disclosure, and thus will not be particularly defined herein.

Step 402: fourth indication information sent by the second terminal device is received, and the fourth indication information carries an identifier of a target relay terminal device determined by the second terminal device.

Optionally, the target relay terminal device is included in the at least one candidate relay terminal devices. Alternatively, the target relay terminal device is determined by the second terminal device, and not included in the at least one candidate relay terminal devices.

In some embodiments of the present disclosure, upon the receipt of the fourth indication information sent by the second terminal device, the first terminal device sends acknowledgement indication information to the second terminal device.

In some embodiments of the present disclosure, upon the receipt of the fourth indication information sent by the second terminal device, the first terminal device establishes a connection with the target relay terminal device.

In some embodiments of the present disclosure, upon the receipt of the fourth indication information sent by the second terminal device, the first terminal device establishes a connection with the second terminal device via the target relay terminal device.

In some embodiments of the present disclosure, in response to a connection establishment failure between the first terminal device and the target relay terminal device, the first terminal device sends rejection indication information to the second terminal device.

It should be appreciated that, in a case that the first terminal device is capable of establishing the connection with the target relay terminal device, it may perform at least one of the followings: sending the acknowledgement indication information to the second terminal device; establishing the connection with the target relay terminal device; or establishing the connection with the second terminal device via the target relay terminal device.

In a word, the first indication information is sent to the second terminal device, the fourth indication information sent by the second terminal device is received, and the fourth indication information carries the identifier of the target relay terminal device determined by the second terminal device. As a result, it is able to achieve the relay connection between the first terminal device and the second terminal device, effectively improve the link capacity of the direct communication link between the terminal devices, improve the communication quality and the system communication efficiency, ensure that the communication service between the terminal devices is performed normally, and effectively prevent the communication from being interrupted.

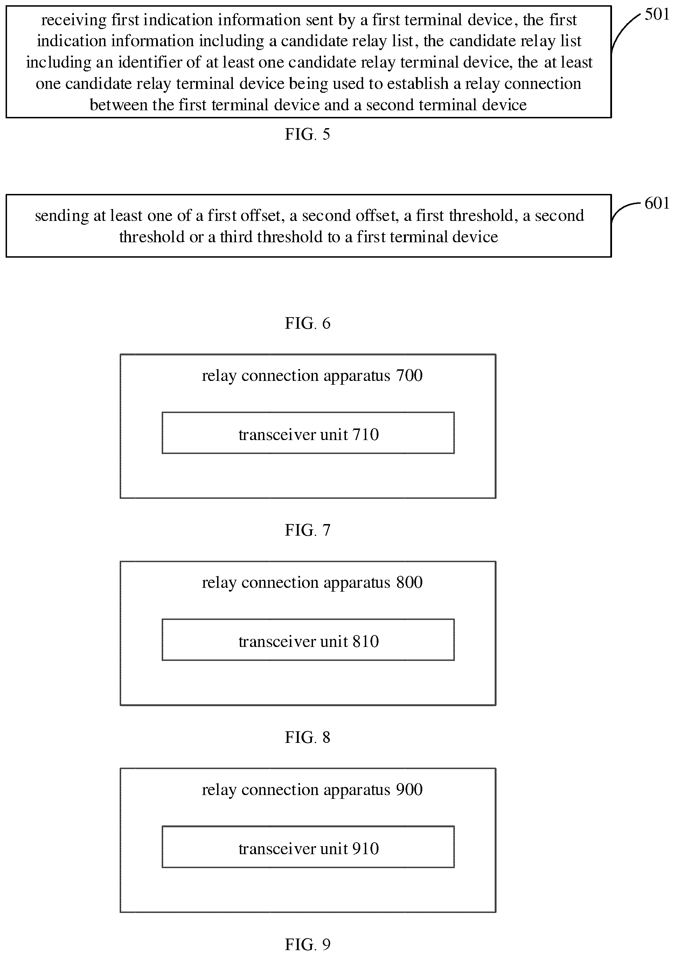

FIG. 5 is a flow chart of a relay connection method according to an embodiment of the present disclosure. It should be appreciated that, the relay connection method in this embodiment of the present disclosure is executed by a second terminal device. This method may be executed separately, or in combination with any of the other embodiments of the present disclosure. As shown in FIG. 5, the relay connection method includes the following step.

Step 501: first indication information sent by a first terminal device is received. The first indication information includes a candidate relay list, the candidate relay list includes an identifier of at least one candidate relay terminal device, and the at least one candidate relay terminal device is used to establish a relay connection between the first terminal device and the second terminal device.

In this embodiment of the present disclosure, unicast communication has already been established between the first terminal device and the second terminal device. The first terminal device is in direct communication with the second terminal device, or in communication with the second terminal device via a serving relay terminal device.

In this embodiment of the present disclosure, the second terminal device receives the first indication information carrying the candidate relay list sent by the first terminal device, and the candidate relay list includes the identifier of the at least one candidate relay terminal device. Upon the receipt of the first indication information, the second terminal device determines the at least one candidate relay terminal device based on the first indication information.

The at least one candidate relay terminal device is used to establish the relay connection between the first terminal device and the second terminal device. In other words, the connection is achieved between the first terminal device and the second terminal device via the at least one candidate relay terminal device.

In some embodiments of the present disclosure, the at least one candidate relay terminal device meets at least one of following conditions, i.e., the at least one candidate relay terminal device is determined from the candidate relay list based on at least one of the following conditions: that the at least one candidate relay terminal device belongs to at least one relay terminal device discovered by the first terminal device; that the at least one candidate relay terminal device does not belong to a serving relay terminal device; that a measurement result of a channel between the at least one candidate relay terminal device and the first terminal device is greater than a first threshold; that the at least one candidate relay terminal device has a capability of establishing a connection with the second terminal device; that the measurement result of the channel between the at least one candidate relay terminal device and the first terminal device is greater than a sum of a measurement result of a channel between the first terminal device and the second terminal device and a first offset; or that the measurement result of the channel between the at least one candidate relay terminal device and the first terminal device is greater than a sum of a measurement result of a channel between the first terminal device and the serving relay terminal device and a second offset.

The serving relay terminal device refers to a terminal device which has already provided the relay function for the connection between the terminal devices.

In this embodiment of the present disclosure, whether or not the at least one candidate relay terminal device has the capability of establishing the connection with the second terminal device is determined based on whether or not a discovery signal for the candidate relay terminal device carries an identifier of the second terminal device. In other words, in a case that the discovery signal for one terminal device carries the identifier of the second terminal device, it may be determined that the terminal device has the capability of establishing the connection with the second terminal device.

In some embodiments of the present disclosure, the first indication information further includes the measurement result of the channel between the first terminal device and the at least one candidate relay terminal device.

In some embodiments of the present disclosure, the first indication information further includes the measurement result of the channel between the first terminal device and the second terminal device or between the first terminal device and a serving relay terminal device.

It should be appreciated that, in a case that the first terminal device is in direct communication with the second terminal device, the first indication information includes the measurement result of the channel between the first terminal device and the second terminal device. In a case that the first terminal device is in communication with the second terminal device via the serving relay terminal device, the first indication information includes the measurement result of the channel between the first terminal device and the serving relay terminal device.

In this embodiment of the present disclosure, optionally, the measurement result of the channel is a SD-RSRP or a SL-RSRP.

In some embodiments of the present disclosure, the second terminal device sends at least one of the first offset, the second offset, the first threshold, a second threshold or a third threshold to the first terminal device.

The second threshold and the third threshold are used to trigger the first terminal device to send the first indication information.

Optionally, in a case that the measurement result of the channel between the first terminal device and the second terminal device is smaller than the second threshold, the first terminal device is triggered to send the first indication information.

Optionally, in a case that the measurement result of the channel between the first terminal device and the serving relay terminal device is smaller than the third threshold, the first terminal device is triggered to send the first indication information.

In some embodiments of the present disclosure, in response to the second terminal device not receiving the first indication information sent by the first terminal device, the second terminal device sends second indication information to the first terminal device, and the second indication information is used to indicate the first terminal device to send the candidate relay list.

In some embodiments of the present disclosure, the second terminal device sends fourth indication information to the first terminal device, and the fourth indication information carries an identifier of a target relay terminal device determined by the second terminal device.

Optionally, the target relay terminal device is included in the at least one candidate relay terminal device. The target relay terminal device may also be determined by the second terminal device and not included in the at least one candidate relay terminal device.

In some embodiments of the present disclosure, after sending the fourth indication information to the first terminal device, the second terminal device receives acknowledgement indication information sent by the first terminal device. Upon the receipt of the acknowledgement indication information, the second terminal device establishes the connection with the first terminal device via the target relay terminal device.

In some embodiments of the present disclosure, in response to a connection establishment failure between the first terminal device and the target relay terminal device, the second terminal device receives rejection indication information sent by the first terminal device.

In a word, the first indication information sent by the first terminal device is received, the first indication information includes the candidate relay list, the candidate relay list includes the identifier of the at least one candidate relay terminal device, and the at least one candidate relay terminal device is used to establish the relay connection between the first terminal device and the second terminal device. As a result, it is able to achieve the relay connection between the first terminal device and the second terminal device, effectively improve the link capacity of the direct communication link between the terminal devices, improve the communication quality and the system communication efficiency, ensure that the communication service between the terminal devices is performed normally, and effectively prevent the communication from being interrupted.

FIG. 6 is a flow chart of a relay connection method according to an embodiment of the present disclosure. It should be appreciated that, the relay connection method in this embodiment of the present disclosure is executed by a network device. This method may be executed separately, or in combination with any of the other embodiments of the present disclosure. As shown in FIG. 6, the relay connection method includes the following step.

Step 601: at least one of a first offset, a second offset, a first threshold, a second threshold or a third threshold is sent to a first terminal device.

The first offset, the second offset and the first threshold are used to determine at least one candidate relay terminal device, the second threshold and the third threshold are used to trigger the first terminal device to send first indication information, the first indication information includes a candidate relay list, the candidate relay list includes an identifier of the at least one candidate relay terminal device, and the at least one candidate relay terminal device is used to establish a relay connection between the first terminal device and a second terminal device.

Optionally, the at least one candidate relay terminal device meets a condition that a measurement result of a channel between the at least one candidate relay terminal device and the first terminal device is greater than a first threshold.

Optionally, the at least one candidate relay terminal device meets a condition that the measurement result of the channel between the at least one candidate relay terminal device and the first terminal device is greater than a sum of a measurement result of a channel between the first terminal device and the second terminal device and the first offset.

Optionally, the at least one candidate relay terminal device meets a condition that the measurement result of the channel between the at least one candidate relay terminal device and the first terminal device is greater than a sum of a measurement result of a channel between the first terminal device and a serving relay terminal device and the second offset.

Optionally, in a case that the measurement result of the channel between the first terminal device and the second terminal device is smaller than the second threshold, the first terminal device is triggered to send the first indication information.

Optionally, in a case that the measurement result of the channel between the first terminal device and the serving relay terminal device is smaller than the third threshold, the first terminal device is triggered to send the first indication information.

In some embodiments of the present disclosure, the network device sends a broadcast message to the first terminal device, and the broadcast message carries at least one of the first offset, the second offset, the first threshold, the second threshold or the third threshold.

In some embodiments of the present disclosure, the network device sends a first signaling corresponding to the first terminal device to the first terminal device, and the first signaling carries at least one of the first offset, the second offset, the first threshold, the second threshold or the third threshold.

Optionally, the first signaling includes a plurality of second thresholds, and different second terminal devices correspond to different second thresholds. Identically, the first signaling also includes a plurality of third thresholds, and different serving relay terminal devices correspond to different third thresholds. The first signaling further includes a plurality of a plurality of first offsets, and different second terminal devices correspond to different first offsets. The first signaling further includes a plurality of second offsets, and different serving relay terminal devices correspond to different second offsets.

It should be appreciated that, different first terminal devices correspond to different first signalings, and at least ones of the first offsets, the second offsets, the first thresholds, the second thresholds or the third thresholds are different. In other words, the network device configures different offsets and thresholds for different first terminal devices via the signaling dedicated for each first terminal device, and different first terminal devices correspond to different first thresholds or the like.

In a word, by sending the at least one of the first offset, the second offset, the first threshold, the second threshold or the third threshold to the first terminal device, relevant information for establishing the relay connection is flexibly configured for the first terminal device. As a result, it is able to achieve the relay connection between the first terminal device and the second terminal device, effectively improve the link capacity of the direct communication link between the terminal devices, improve the communication quality and the system communication efficiency, ensure that the communication service between the terminal devices is performed normally, and effectively prevent the communication from being interrupted.

Corresponding to the relay connection method provided in the above embodiments, the present disclosure further provides in some embodiments a relay connection apparatus. The relay connection apparatus provided in the embodiments of the present disclosure correspond to the methods provided in the above embodiments, so the implementation of the relay connection method also applies to the relay connection apparatus and will not be particularly defined herein.

FIG. 7 is a schematic view showing a relay connection apparatus according to an embodiment of the present disclosure.

As shown in FIG. 7, the relay connection apparatus 700 includes a transceiver unit 710.

The transceiver unit 710 is configured to send first indication information to a second terminal device.

The first indication information includes a candidate relay list, the candidate relay list includes an identifier of at least one candidate relay terminal device, and the at least one candidate relay terminal device is used to establish a relay connection between a first terminal device and the second terminal device.

Optionally, the at least one candidate relay terminal device meets at least one of following conditions: that the at least one candidate relay terminal device belongs to at least one relay terminal device discovered by the first terminal device; that the at least one candidate relay terminal device does not belong to a serving relay terminal device; that a measurement result of a channel between the at least one candidate relay terminal device and the first terminal device is greater than a first threshold; that the at least one candidate relay terminal device has a capability of establishing a connection with the second terminal device; that the measurement result of the channel between the at least one candidate relay terminal device and the first terminal device is greater than a sum of a measurement result of a channel between the first terminal device and the second terminal device and a first offset; or that the measurement result of the channel between the at least one candidate relay terminal device and the first terminal device is greater than a sum of a measurement result of a channel between the first terminal device and the serving relay terminal device and a second offset.

Optionally, the first indication information includes the measurement result of the channel between the first terminal device and the at least one candidate relay terminal device.

Optionally, the first indication information includes the measurement result of the channel between the first terminal device and the second terminal device or between the first terminal device and the serving relay terminal device.

Optionally, the transceiver unit 710 is specifically configured to, in response to a first condition being met, send the first indication information to the second terminal device. The first condition includes at least one of: that a measurement result of a channel between the first terminal device and the second terminal device is smaller than a second threshold; that a measurement result of a channel between the first terminal device and a serving relay terminal device is smaller than a third threshold; that a measurement result of a channel between the first terminal device and the at least one candidate relay terminal device is greater than a first threshold; that the measurement result of the channel between the first terminal device and the at least one candidate relay terminal device is greater than a sum of the measurement result of the channel between the first terminal device and the second terminal device and a first offset; or that the measurement result of the channel between the first terminal device and the at least one candidate relay terminal device is greater than a sum of the measurement result of the channel between the first terminal device and the serving relay terminal device and a second offset.

Optionally, the transceiver unit 710 is specifically configured to: in response to receiving second indication information sent by the second terminal device, send the first indication information to the second terminal device, and the second indication information is used to indicate the first terminal device to send the candidate relay list.

Optionally, the transceiver unit 710 is specifically configured to: in response to receiving third indication information sent by a serving relay terminal device, send the first indication information to the second terminal device, and the third indication information is used to indicate the first terminal device to send the candidate relay list.

Optionally, the transceiver unit 710 is further configured to: receive at least one of the first offset, the second offset, the first threshold, the second threshold or the third threshold sent by the second terminal device.

Optionally, the transceiver unit 710 is further configured to: receive at least one of the first offset, the second offset, the first threshold, the second threshold or the third threshold sent by the serving relay terminal device.

Optionally, the transceiver unit 710 is further configured to: determine at least one of the first offset, the second offset, the first threshold, the second threshold or the third threshold based on resource pool configuration information, and the resource pool configuration information is determined based on a broadcast message sent by a network device or configuration information sent by the network device.

Optionally, the transceiver unit 710 is further configured to: receive at least one of the first offset, the second offset, the first threshold, the second threshold or the third threshold sent by the network device.

Optionally, the transceiver unit 710 is further configured to: determine at least one of the first offset, the second offset, the first threshold, the second threshold or the third threshold.

Optionally, the measurement result of the channel is a SD-RSRP or a SL-RSRP.

Optionally, the transceiver unit 710 is further configured to: receive fourth indication information sent by the second terminal device, and the fourth indication information carries an identifier of a target relay terminal device determined by the second terminal device.

Optionally, the transceiver unit 710 is further configured to: send acknowledgement indication information to the second terminal device.

Optionally, the transceiver unit 710 is further configured to: establish a connection with the target relay terminal device.

Optionally, the transceiver unit 710 is further configured to: establish a connection with the second terminal device via the target relay terminal device.

Optionally, the transceiver unit 710 is further configured to: in response to a connection establishment failure between the first terminal device and the target relay terminal device, send rejection indication information to the second terminal device.

According to the relay connection apparatus in the embodiments of the present disclosure, the first indication information is sent to the second terminal device, the first indication information includes the candidate relay list, the candidate relay list includes the identifier of the at least one candidate relay terminal device, and the at least one candidate relay terminal device is used to establish the relay connection between the first terminal device and the second terminal device. As a result, it is able to achieve the relay connection between the first terminal device and the second terminal device, effectively improve the link capacity of the direct communication link between the terminal devices, improve the communication quality and the system communication efficiency, ensure that the communication service between the terminal devices is performed normally, and effectively prevent the communication from being interrupted.

FIG. 8 is a schematic view showing a relay connection apparatus according to an embodiment of the present disclosure.

As shown in FIG. 8, the relay connection apparatus 800 includes a transceiver unit 810.

The transceiver unit 810 is configured to receive first indication information sent by a first terminal device.

The first indication information includes a candidate relay list, the candidate relay list includes an identifier of at least one candidate relay terminal device, and the at least one candidate relay terminal device is used to establish a relay connection between the first terminal device and the second terminal device.

Optionally, the at least one candidate relay terminal device meets at least one of following conditions: that the at least one candidate relay terminal device belongs to at least one relay terminal device discovered by the first terminal device; that the at least one candidate relay terminal device does not belong to a serving relay terminal device; that a measurement result of a channel between the at least one candidate relay terminal device and the first terminal device is greater than a first threshold; that the at least one candidate relay terminal device has a capability of establishing a connection with the second terminal device; that the measurement result of the channel between the at least one candidate relay terminal device and the first terminal device is greater than a sum of a measurement result of a channel between the first terminal device and the second terminal device and a first offset; or that the measurement result of the channel between the at least one candidate relay terminal device and the first terminal device is greater than a sum of a measurement result of a channel between the first terminal device and the serving relay terminal device and a second offset.

Optionally, the first indication information includes the measurement result of the channel between the first terminal device and the at least one candidate relay terminal device.

Optionally, the first indication information includes the measurement result of the channel between the first terminal device and the second terminal device or between the first terminal device and the serving relay terminal device.

Optionally, the transceiver unit 810 is further configured to: send at least one of the first offset, the second offset, the first threshold, a second threshold or a third threshold to the first terminal device, and the second threshold and the third threshold are used to trigger the first terminal device to send the first indication information.

Optionally, the measurement result of the channel is a SD-RSRP or a SL-RSRP.

Optionally, the transceiver unit 810 is further configured to: send fourth indication information to the first terminal device, and the fourth indication information carries an identifier of a target relay terminal device determined by the second terminal device from the at least one candidate relay terminal device.

Optionally, the transceiver unit 810 is further configured to: receive acknowledgement indication information sent by the first terminal device; and establish a connection with the first terminal device via the target relay terminal device.

Optionally, the transceiver unit 810 is further configured to: in response to a connection establishment failure between the first terminal device and the target relay terminal device, receive rejection indication information sent by the first terminal device.

Optionally, the transceiver unit 810 is further configured to: in response to not receiving the first indication information sent by the first terminal device, send second indication information to the first terminal device, and the second indication information is used to indicate the first terminal device to send the candidate relay list.

According to the relay connection apparatus in the embodiments of the present disclosure, the first indication information sent by the first terminal device is received, the first indication information includes the candidate relay list, the candidate relay list includes the identifier of the at least one candidate relay terminal device, and the at least one candidate relay terminal device is used to establish the relay connection between the first terminal device and the second terminal device. As a result, it is able to achieve the relay connection between the first terminal device and the second terminal device, effectively improve the link capacity of the direct communication link between the terminal devices, improve the communication quality and the system communication efficiency, ensure that the communication service between the terminal devices is performed normally, and effectively prevent the communication from being interrupted.

FIG. 9 is a schematic view showing a relay connection apparatus according to an embodiment of the present disclosure.

As shown in FIG. 9, the relay connection apparatus 900 includes a transceiver unit 910.

The transceiver unit 910 is configured to send at least one of a first offset, a second offset, a first threshold, a second threshold or a third threshold to a first terminal device.

The first offset, the second offset and the first threshold are used to determine at least one candidate relay terminal device, the second threshold and the third threshold are used to trigger the first terminal device to send first indication information, the first indication information includes a candidate relay list, the candidate relay list includes an identifier of the at least one candidate relay terminal device, and the at least one candidate relay terminal device is used to establish a relay connection between the first terminal device and a second terminal device.

Optionally, the transceiver unit 910 is specifically configured to: send a broadcast message to the first terminal device, and the broadcast message carries the at least one of the first offset, the second offset, the first threshold, the second threshold or the third threshold.

Optionally, the transceiver unit 910 is specifically configured to: send a first signaling corresponding to the first terminal device to the first terminal device, and the first signaling carries the at least one of the first offset, the second offset, the first threshold, the second threshold or the third threshold.

According to the relay connection apparatus in the embodiments of the present disclosure, by sending the at least one of the first offset, the second offset, the first threshold, the second threshold or the third threshold to the first terminal device, relevant information for establishing the relay connection is flexibly configured for the first terminal device. As a result, it is able to achieve the relay connection between the first terminal device and the second terminal device, effectively improve the link capacity of the direct communication link between the terminal devices, improve the communication quality and the system communication efficiency, ensure that the communication service between the terminal devices is performed normally, and effectively prevent the communication from being interrupted.

In order to implement the above-mentioned embodiments, the present disclosure further provides in some embodiments a communication apparatus, which includes a processor and a memory. The memory is configured to store therein a computer program, and the processor is configured to execute the computer program stored in the memory so as to implement the method in FIGs. 2 to 4 or the method in FIG. 5.

In order to implement the above-mentioned embodiments, the present disclosure further provides in some embodiments a communication apparatus, including a processor and a memory. The memory is configured to store therein a computer program, and the processor is configured to execute the computer program stored in the memory so as to implement the method in FIG. 6.

In order to implement the above-mentioned embodiments, the present disclosure further provides in some embodiments a communication apparatus, including a processor and an interface circuit. The interface circuit is configured to receive code instructions and transmit the code instructions to the processor, and the processor is configured to execute the code instructions so as to implement the method in FIGs. 2 to 4 or the method in FIG. 5.

In order to implement the above-mentioned embodiments, the present disclosure further provides in some embodiments a communication apparatus, including a processor and an interface circuit. The interface circuit is configured to receive code instructions and transmit the code instructions to the processor, and the processor is configured to execute the code instructions so as to implement the method in FIG. 6.

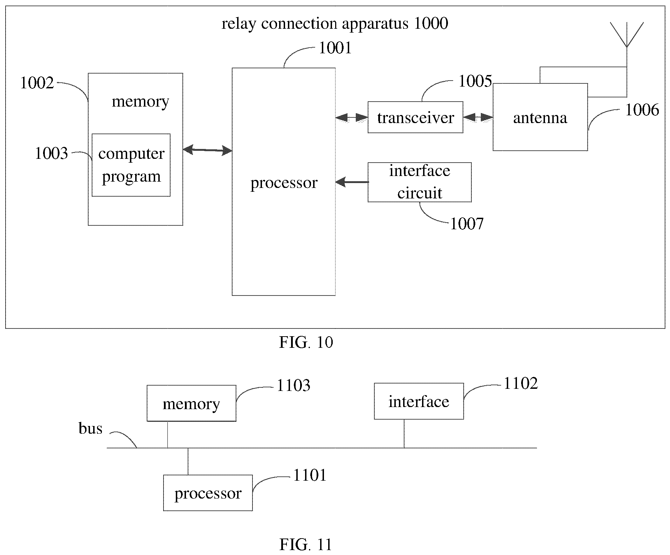

FIG. 10 is a schematic view showing another relay connection apparatus according to an embodiment of the present disclosure. The relay connection apparatus 1000 may be a network device, a terminal device, or a chip, a chip system or a processor which supports the network device to implement the above-mentioned method, or a chip, a chip system or a processor which supports the terminal device to implement the above-mentioned method. The apparatus is used to implement the above-mentioned method, which will not be particularly defined herein.

The relay connection apparatus 1000 may include one or more processors 1001. The processor 1001 may be a general-purpose processor or special-purpose processor, e.g., a baseband processor or a central processing unit. The baseband processor is configured to process a communication protocol as well as communication data, and the central processing unit is configured to control the communication apparatus (e.g., a base station, a baseband chip, a terminal device, a terminal device chip, a Distributed Unit (DU) or a Centralized Unit (CU)), execute a computer program, and process data in the computer program.

Optionally, the relay connection apparatus 1000 further includes one or more memories 1002 storing therein a computer program 1003. The computer program 1003 is executed by the processor 1001, so that the relay connection apparatus 1000 executes the above-mentioned method. The computer program 1003 may be programmed in the processor 1001, and in this case, the processor 1001 may be implemented through hardware.

Optionally, the memory 1002 is configured to store therein data. The relay connection apparatus 1000 and the memory 1002 may be arranged separately or integrated with each other.

Optionally, the relay connection apparatus 1000 further includes a transceiver 1005 and an antenna 1006. The transceiver 1005 is also called as a transceiver unit, a transceiver machine or a transceiver circuit, and it is configured to achieve a transmission function and a reception function. The transceiver 1005 includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the relay connection apparatus 1000 further includes one or more interface circuits 1007. The interface circuit 1007 is configured to receive code instructions and transmit it to the processor 1001. The processor 1001 executes the code instructions, so that the relay connection apparatus 1000 implements the above-mentioned method.

In an embodiment of the present disclosure, the processor 1001 may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit or transfer signals.

In an embodiment of the present disclosure, the relay connection apparatus 1000 includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The relay connection apparatus mentioned hereinabove may be a network device or a terminal device, but the scope of the relay connection apparatus is not limited thereto. In addition, a structure of the relay connection apparatus may not be limited by FIGs. 7 to 9. The relay connection apparatus may be an independent device, or a part of a large device. For example, the relay connection apparatus may be: (1) an independent IC, chip, chip system or chip sub-system; (2) a set of one or more ICs (optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

In a case that the relay connection apparatus is a chip or a chip system, as shown in FIG. 11, the chip includes a processor 1101 and an interface 1102. There may exist one or more processors 1101, and one or more interfaces 1102.

In a case that the chip is used to achieve the functions of the network device in the embodiments of the present disclosure, the interface 1102 is configured to receive code instructions and transmit the code instructions to the processor, and the processor 1101 is configured to execute the code instructions to implement the method in FIGs. 2 to 4 or the method in FIG. 5.

In a case that the chip is used to achieve the functions of the terminal device in the embodiments of the present disclosure, the interface 1102 is configured to receive code instructions and transmit the code instructions to the processor, and the processor 1101 is configured to execute the code instructions to implement the method in FIG. 6.

Optionally, the chip further includes a memory 1103 for storing therein necessary computer programs and data.

It should be appreciated that, various illustrative logical blocks and steps listed in the embodiments of the present disclosure may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a communication system, which includes the relay connection apparatus in FIGs. 7 to 9 as a terminal device and the relay connection apparatus as a network device, or includes the relay connection apparatus in FIG. 10 as a terminal device and the relay connection apparatus as a network device.

The present disclosure further provides in some embodiments a readable storage medium storing therein instructions. The instructions are executed by a computer so as to achieve the functions in any of the above-mentioned method embodiments.

The present disclosure further provides in some embodiments a computer program product. The computer program product is executed by a computer so as to achieve the functions in any of the above-mentioned method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of the same kind, the words "first", "second", "third", "A", "B", "C" and "D" are used to differentiate these technical features, without indicating any sequence or sizes thereof.

The correspondence shown in each table in the present disclosure may be configured or predefined. Values of information in each table are for illustrative purposes only, and any other values may also be configured, which will not be particularly defined herein. In a case of configuring the correspondence between the information and parameters, it is not necessary to configure all the correspondences in the table. For example, in the table in the embodiments of the present disclosure, correspondences shown in some rows may not be configured. For another example, appropriate deformation or adjustment may be performed based on the table, e.g., splitting or combination. A name of each parameter in each table may use the other name capable of being understood by the communication apparatus, and a value of the parameter or a presentation mode thereof may also use that capable of being understood by the communication apparatus. During the implementation of each table, the other data structure may also be used, e.g., array, queue, container, stack, linear table, pointer, linked list, tree, map, structure, class, heap, or hash table.

The term "predefined" in the embodiments of the present disclosure may be understood as "defined", "defined in advance", "stored", "pre-stored", "pre-negotiated", "preconfigured", "programmed" or "pre-programed".

It should be appreciated that, units and algorithm steps for instances described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, apparatus and units described hereinabove may refer to the corresponding procedures in the method embodiments, and thus will not be particularly defined herein.

It should be appreciated that, all forms of processes shown above may be used, and steps thereof may be reordered, added or deleted. For example, as long as expected results of the technical solutions of the present disclosure can be achieved, steps set forth in the present disclosure may be performed in parallel, performed sequentially, or performed in a different order, and there is no limitation in this regard.

The foregoing specific implementations constitute no limitation on the scope of the present disclosure. It should be appreciated that, various modifications, combinations, sub-combinations and replacements may be made according to design requirements and other factors. Any modifications, equivalent replacements and improvements made without deviating from the spirit and principle of the present disclosure shall be deemed as falling within the scope of the present disclosure.

## Claims

1. A relay connection method, executed by a first terminal device, comprising:
sending first indication information to a second terminal device,
wherein the first indication information comprises a candidate relay list, the candidate relay list comprises an identifier of at least one candidate relay terminal device, and the at least one candidate relay terminal device is used to establish a relay connection between the first terminal device and the second terminal device.

2. The relay connection method of claim 1, wherein the at least one candidate relay terminal device meets at least one of following conditions:
that the at least one candidate relay terminal device belongs to at least one relay terminal device discovered by the first terminal device;
that the at least one candidate relay terminal device does not belong to a serving relay terminal device;
that a measurement result of a channel between the at least one candidate relay terminal device and the first terminal device is greater than a first threshold;
that the at least one candidate relay terminal device has a capability of establishing a connection with the second terminal device;
that the measurement result of the channel between the at least one candidate relay terminal device and the first terminal device is greater than a sum of a measurement result of a channel between the first terminal device and the second terminal device and a first offset; or
that the measurement result of the channel between the at least one candidate relay terminal device and the first terminal device is greater than a sum of a measurement result of a channel between the first terminal device and the serving relay terminal device and a second offset.

3. The relay connection method of claim 1, wherein the first indication information comprises a measurement result of a channel between the first terminal device and the at least one candidate relay terminal device.

4. The relay connection method of claim 1, wherein the first indication information comprises a measurement result of a channel between the first terminal device and the second terminal device or between the first terminal device and a serving relay terminal device.

5. The relay connection method of claim 1, wherein sending the first indication information to the second terminal device comprises:
in response to a first condition being met, sending the first indication information to the second terminal device,
wherein the first condition comprises at least one of:
that a measurement result of a channel between the first terminal device and the second terminal device is smaller than a second threshold;
that a measurement result of a channel between the first terminal device and a serving relay terminal device is smaller than a third threshold;
that a measurement result of a channel between the first terminal device and the at least one candidate relay terminal device is greater than a first threshold;
that the measurement result of the channel between the first terminal device and the at least one candidate relay terminal device is greater than a sum of the measurement result of the channel between the first terminal device and the second terminal device and a first offset; or
that the measurement result of the channel between the first terminal device and the at least one candidate relay terminal device is greater than a sum of the measurement result of the channel between the first terminal device and the serving relay terminal device and a second offset.

6. The relay connection method of claim 1, wherein sending the first indication information to the second terminal device comprises:
in response to receiving second indication information sent by the second terminal device, sending the first indication information to the second terminal device,
wherein the second indication information is used to indicate the first terminal device to send the candidate relay list.

7. The relay connection method of claim 1, wherein sending the first indication information to the second terminal device comprises:
in response to receiving third indication information sent by a serving relay terminal device, sending the first indication information to the second terminal device,
wherein the third indication information is used to indicate the first terminal device to send the candidate relay list.

8. The relay connection method of claim 2 or 5, further comprising:
receiving at least one of the first offset, the second offset, the first threshold, the second threshold or the third threshold sent by the second terminal device.

9. The relay connection method of claim 2 or 5, further comprising:
receiving at least one of the first offset, the second offset, the first threshold, the second threshold or the third threshold sent by the serving relay terminal device.

10. The relay connection method of claim 2 or 5, further comprising:
determining at least one of the first offset, the second offset, the first threshold, the second threshold or the third threshold based on resource pool configuration information,
wherein the resource pool configuration information is determined based on a broadcast message sent by a network device or configuration information sent by the network device.

11. The relay connection method of claim 2 or 5, further comprising:
receiving at least one of the first offset, the second offset, the first threshold, the second threshold or the third threshold sent by a network device.

12. The relay connection method of claim 2 or 5, further comprising:
determining at least one of the first offset, the second offset, the first threshold, the second threshold or the third threshold.

13. The relay connection method of claim 2 or 5, wherein the measurement result of the channel is a Sidelink Discovery signal-Reference Signal Receiving Power (SD-RSRP) or a Sidelink-Reference Signal Receiving Power (SL-RSRP).

14. The relay connection method of claim 1, further comprising:
receiving fourth indication information sent by the second terminal device,
wherein the fourth indication information carries an identifier of a target relay terminal device determined by the second terminal device.

15. The relay connection method of claim 14, further comprising:
sending acknowledgement indication information to the second terminal device.

16. The relay connection method of claim 14, further comprising:
establishing a connection with the target relay terminal device.

17. The relay connection method of claim 14, further comprising:
establishing a connection with the second terminal device via the target relay terminal device.

18. The relay connection method of any one of claims 15 to 17, further comprising:
in response to a connection establishment failure between the first terminal device and the target relay terminal device, sending rejection indication information to the second terminal device.

19. A relay connection method, executed by a second terminal device, comprising:
receiving first indication information sent by a first terminal device,
wherein the first indication information comprises a candidate relay list, the candidate relay list comprises an identifier of at least one candidate relay terminal device, and the at least one candidate relay terminal device is used to establish a relay connection between the first terminal device and the second terminal device.

20. The relay connection method of claim 19, wherein the at least one candidate relay terminal device meets at least one of following conditions:
that the at least one candidate relay terminal device belongs to at least one relay terminal device discovered by the first terminal device;
that the at least one candidate relay terminal device does not belong to a serving relay terminal device;
that a measurement result of a channel between the at least one candidate relay terminal device and the first terminal device is greater than a first threshold;
that the at least one candidate relay terminal device has a capability of establishing a connection with the second terminal device;
that the measurement result of the channel between the at least one candidate relay terminal device and the first terminal device is greater than a sum of a measurement result of a channel between the first terminal device and the second terminal device and a first offset; or
that the measurement result of the channel between the at least one candidate relay terminal device and the first terminal device is greater than a sum of a measurement result of a channel between the first terminal device and the serving relay terminal device and a second offset.

21. The relay connection method of claim 19, wherein the first indication information comprises a measurement result of a channel between the first terminal device and the at least one candidate relay terminal device.

22. The relay connection method of claim 19, wherein the first indication information comprises a measurement result of a channel between the first terminal device and the second terminal device or between the first terminal device and a serving relay terminal device.

23. The relay connection method of claim 20, further comprising:
sending at least one of the first offset, the second offset, the first threshold, a second threshold or a third threshold to the first terminal device,
wherein the second threshold and the third threshold are used to trigger the first terminal device to send the first indication information.

24. The relay connection method of claim 20, wherein the measurement result of the channel is a SD-RSRP or a SL-RSRP.

25. The relay connection method of claim 19, further comprising:
sending fourth indication information to the first terminal device,
wherein the fourth indication information carries an identifier of a target relay terminal device determined by the second terminal device.

26. The relay connection method of claim 25, further comprising:
receiving acknowledgement indication information sent by the first terminal device; and
establishing a connection with the first terminal device via the target relay terminal device.

27. The relay connection method of claim 25 or 26, further comprising:
in response to a connection establishment failure between the first terminal device and the target relay terminal device, receiving rejection indication information sent by the first terminal device.

28. The relay connection method of claim 19, further comprising:
in response to not receiving the first indication information sent by the first terminal device, sending second indication information to the first terminal device,
wherein the second indication information is used to indicate the first terminal device to send the candidate relay list.

29. A relay connection method, executed by a network device, comprising:
sending at least one of a first offset, a second offset, a first threshold, a second threshold or a third threshold to a first terminal device,
wherein the first offset, the second offset and the first threshold are used to determine at least one candidate relay terminal device, the second threshold and the third threshold are used to trigger the first terminal device to send first indication information, the first indication information comprises a candidate relay list, the candidate relay list comprises an identifier of the at least one candidate relay terminal device, and the at least one candidate relay terminal device is used to establish a relay connection between the first terminal device and a second terminal device.

30. The relay connection method of claim 29, wherein sending the at least one of the first offset, the second offset, the first threshold, the second threshold or the third threshold to the first terminal device comprises:
sending a broadcast message to the first terminal device, wherein the broadcast message carries the at least one of the first offset, the second offset, the first threshold, the second threshold or the third threshold.

31. The relay connection method of claim 29, wherein sending the at least one of the first offset, the second offset, the first threshold, the second threshold or the third threshold to the first terminal device comprises:
sending a first signaling corresponding to the first terminal device to the first terminal device, wherein the first signaling carries the at least one of the first offset, the second offset, the first threshold, the second threshold or the third threshold.

32. A relay connection apparatus, applied to a first terminal device, comprising:
a transceiver unit configured to send first indication information to a second terminal device,
wherein the first indication information comprises a candidate relay list, the candidate relay list comprises an identifier of at least one candidate relay terminal device, and the at least one candidate relay terminal device is used to establish a relay connection between the first terminal device and the second terminal device.

33. A relay connection apparatus, applied to a second terminal device, comprising:
a transceiver unit configured to receive first indication information sent by a first terminal device,
wherein the first indication information comprises a candidate relay list, the candidate relay list comprises an identifier of at least one candidate relay terminal device, and the at least one candidate relay terminal device is used to establish a relay connection between the first terminal device and the second terminal device.

34. A relay connection apparatus, applied to a network device, comprising:
a transceiver unit configured to send at least one of a first offset, a second offset, a first threshold, a second threshold or a third threshold to a first terminal device,
wherein the first offset, the second offset and the first threshold are used to determine at least one candidate relay terminal device, the second threshold and the third threshold are used to trigger the first terminal device to send first indication information, the first indication information comprises a candidate relay list, the candidate relay list comprises an identifier of the at least one candidate relay terminal device, and the at least one candidate relay terminal device is used to establish a relay connection between the first terminal device and a second terminal device.

35. A communication apparatus, comprising a processor and a memory, wherein the memory is configured to store therein a computer program, and the processor is configured to execute the computer program stored in the memory to implement the relay connection method of any one of claims 1 to 18, or the relay connection method of any one of claims 19 to 28.

36. A communication apparatus, comprising a processor and a memory, wherein the memory is configured to store therein a computer program, and the processor is configured to execute the computer program stored in the memory, to implement the relay connection method of any one of claims 29 to 31.

37. A communication apparatus, comprising a processor and an interface circuit,
wherein the interface circuit is configured to receive code instructions and transmit the code instructions to the processor, and
the processor is configured to execute the code instructions to implement the relay connection method of any one of claims 1 to 18, or the relay connection method of any one of claims 19 to 28.

38. A communication apparatus, comprising a processor and an interface circuit,
wherein the interface circuit is configured to receive a code instructions and transmit the code instructions to the processor, and
the processor is configured to execute the code instructions to implement the relay connection method of any one of claims 29 to 31.

39. A computer-readable storage medium storing therein instructions, wherein the instructions, when executed, implement the relay connection method of any one of claims 1 to 18, or the relay connection method of any one of claims 19 to 28.

40. A computer-readable storage medium storing therein instructions, wherein the instructions, when executed, to implement the relay connection method of any one of claims 29 to 31.
